# FASCICULE DE BREVET EUROPEEN

(11) **EP 3 098 500 B1**
(45) Date de publication et mention de la délivrance du brevet: **13.06.2018**
(21) Numéro de dépôt: 16170838.3
(22) Date de dépôt: 23.05.2016
(51) Int. Cl.: F21S 8/10, F21V 8/00

(54) **DISPOSITIF LUMINEUX, NOTAMMENT POUR VEHICULE AUTOMOBILE, ET BOITIER D'ECLAIRAGE COMPRENANT UN TEL DISPOSITIF**
LEUCHTVORRICHTUNG, INSBESONDERE FÜR KRAFTFAHRZEUG, UND BELEUCHTUNGSGEHÄUSE, DAS EINE SOLCHE VORRICHTUNG UMFASST
LIGHTING DEVICE, IN PARTICULAR FOR A MOTOR VEHICLE, AND LIGHTING HOUSING COMPRISING SUCH A DEVICE

(30) Priorité: 27.05.2015 FR 1554780
(43) Date de publication de la demande: 30.11.2016
(73) Titulaire: Valeo Vision Belgique, 7822 Meslin l'Evêque (BE)
(72) Inventeur: VALOIS, Christophe, 59178 HASNON (FR); GRIGORESCU, Beny, 7822 Meslin l'Eveque (BE); HERBIN, Cyril, POTELLE 59530 (FR); WERQUIN, Eric, 59600 ASSEVENT (FR)

(56) Documents cités:
- EP-A2- 2 489 550
- EP-A2- 2 525 139
- WO-A1-2014/119318
- WO-A1-2014/192572
- WO-A1-2015/029852
- FR-A1- 3 009 601
- US-A1- 2012 069 592
- US-A1- 2015 008 840
- US-A1- 2015 055 361

## Description

L'invention concerne un dispositif lumineux, notamment pour véhicule automobile. L'invention concerne encore un projecteur ou une unité d'éclairage et/ou signalisation pour véhicule automobile comprenant un tel dispositif. La présente invention est en particulier destinée à équiper des véhicules automobiles.

Dans ce domaine, il est connu d'utiliser des dispositifs lumineux munis d'une source lumineuse, en général une diode électroluminescente, et un guide de lumière à travers lequel se propage un faisceau lumineux issu de ladite source. La lumière est réfléchie vers l'extérieur par des moyens de réflexion disposés à la surface du guide. En plus d'une fonction d'éclairage, ces dispositifs permettent notamment d'améliorer l'aspect esthétique d'un véhicule.

On connaît des dispositifs lumineux comprenant deux guides de lumière reliés à une source lumineuse, au niveau d'une zone de jonction desdits guides de lumière. Ces guides de lumière divergent l'un de l'autre de manière à former deux branches distinctes, toutes deux émettrices de lumière. Autrement dit, le dispositif lumineux prend alors la forme d'un Y dont les deux branches sont illuminées.

Afin d'améliorer l'esthétique de ce type de dispositifs lumineux, il est connu encore d'utiliser un corps intermédiaire permettant de modifier l'aspect allumé du dispositif lumineux. Le corps intermédiaire, dont une partie est apte à émettre de la lumière, est conçu pour être rapporté entre les deux branches du dispositif de manière à ce que la partie émettrice du dispositif lumineux prennent non plus la forme d'un Y mais celle d'un unique guide linéaire en forme de C. Cette forme en C est généralement plus appréciée des utilisateurs.

Ces dispositifs présentent cependant l'inconvénient de comprendre des portions, notamment deux, non émettrices de lumière au niveau des surfaces de contact entre le corps intermédiaire et les branches émettrices. Autrement dit, l'émission de lumière le long du C est discontinue, ce qui crée des zones d'ombres et altère le rendu visuel dudit dispositif.

Le document FR 3 009 601 divulgue un dispositif lumineux selon le préambule de la revendication 1. L'un des objectifs de l'invention est de résoudre l'inconvénient cité ci-avant. Pour cela, l'invention propose un dispositif lumineux, notamment pour véhicule automobile, comprenant deux guides de lumière, dits principaux, et un guide de lumière, dit de raccordement, chaque guide principal étant muni d'une surface latérale, le guide de raccordement étant joint en continuité de matière à l'un et l'autre desdits guides principaux, au niveau de leur surface latérale respective, ledit dispositif étant configuré pour alimenter en lumière ledit guide de raccordement à partir desdits guides principaux.

De la sorte, la jonction entre le guide de raccordement et les guides principaux, permet d'éviter les zones d'ombres évoquées plus haut.

Selon différents modes de réalisation de l'invention, qui pourront être pris ensemble ou séparément :
- une portion de l'un des guides principaux est située au voisinage d'une portion de l'autre guide principal, les guides principaux divergeant l'un de l'autre, au niveau d'une région de divergence,
- ledit dispositif lumineux comprend en outre un corps intermédiaire permettant de guider la lumière desdits guides principaux vers ledit guide de raccordement, ledit corps intermédiaire étant situé au niveau de ladite région de divergence,
- le guide de raccordement comprend des moyens de passage de la lumière, lesdits moyens de passage étant conçus de manière à permettre un passage de la lumière entre le corps intermédiaire et le guide de raccordement,
- ledit guide de raccordement et le corps intermédiaire sont séparés l'un de l'autre par un espace,
- ledit corps intermédiaire est issu de matière avec l'un et/ou l'autre des guides principaux,
- le corps intermédiaire comprend une surface d'émission agencée en vis-à-vis du guide de raccordement,
- le corps intermédiaire comprend des surfaces latérales jointes aux surfaces latérales respectives des guides principaux,
- le corps intermédiaire présente une épaisseur croissante en s'éloignant desdites portions des guides principaux au voisinage l'une de l'autre,
- les guides principaux comprennent des motifs de réflexion,
- les motifs de réflexion sont agencés en continuité desdits moyens de passage de la lumière,
- lesdits motifs de réflexion et/ou les moyens de passage de la lumière sont des prismes de réflexion,
- les prismes de réflexion sont disposés en relief par rapport à la surface du guide de raccordement,
- le dispositif comprend en outre au moins une source de lumière, la ou lesdites sources de lumière alimentant en lumière lesdits guides principaux,
- le guide de raccordement est issu de matière, notamment de moulage, avec chacun des guides principaux.

L'invention concerne encore une unité d'éclairage et/ou signalisation pour véhicule automobile comprenant un dispositif lumineux tel que décrit ci-dessus.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- La figure 1 est une vue de face, en perspective, d'un dispositif lumineux selon l'invention.
- La figure 2 est une vue de face, en perspective, d'une partie dudit dispositif lumineux selon l'invention.
- La figure 3 est une vue de derrière, en perspective, du dispositif lumineux selon l'invention.
- La figure 4 est une vue de derrière, en perspective, d'une partie du dispositif lumineux selon l'invention.
- La figure 5 est une vue de derrière, en perspective, d'une partie du dispositif lumineux selon l'invention, sur laquelle sont représentés de façon schématique les trajets de faisceaux lumineux.

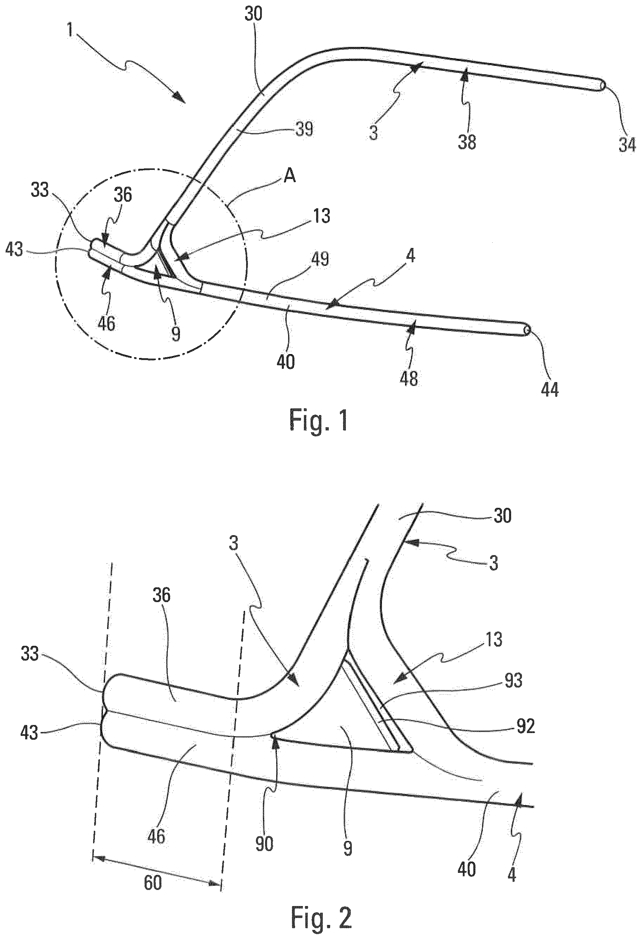

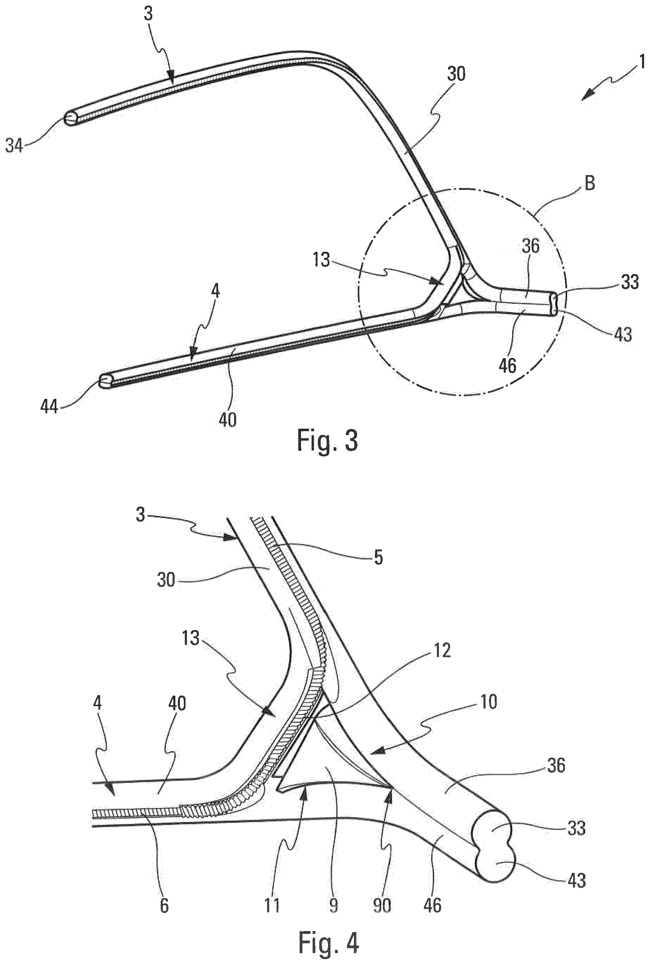

Comme illustrée aux figures 1 et 3, l'invention concerne un dispositif lumineux 1, notamment pour véhicule automobile, comprenant deux guides de lumière 3, 4, dits guides principaux 3, 4. Chacun desdits guides principaux 3, 4 est configuré pour permettre la propagation de la lumière en son sein, c'est-à-dire dans un volume intérieur de chacun desdits guides principaux 3, 4. Autrement dit, chacun desdits guides principaux 3, 4 est conçu pour permettre la propagation de faisceaux lumineux par réflexion totale à travers la matière de chacun desdits guides principaux 3, 4. Encore autrement dit, lesdits guides principaux 3, 4 sont conçus de manière à permettre ladite propagation des faisceaux lumineux par réflexions successives, également appelées réflexions internes, desdits faisceaux lumineux.

Ledit corps principal de chaque guide principal 3, 4 est pour cela avantageusement formé d'un seul et même matériau et est monobloc. Ledit matériau est avantageusement choisi de manière à favoriser la propagation desdits faisceaux lumineux à travers ledit matériau. Un tel matériau est usuellement du polycarbonate (PC) ou polyméthacrylate de méthyle (PMMA).

Ledit corps principal de chaque guide principal 3, 4 étant monobloc et issu d'un seul et même matériau, la propagation desdits faisceaux lumineux à l'intérieur des guides 3, 4 peut se faire sans rencontrer d'obstacle, de séparation ou de discontinuité physique qui pourrait nuire à la propagation desdits faisceaux lumineux. Autrement dit, chaque corps principal 3, 4 est conçu de manière à constituer un milieu uniforme favorisant la propagation desdits faisceaux lumineux.

Avantageusement, lesdits guides principaux 3, 4 comprennent chacun un corps principal de forme longitudinale et sensiblement cylindrique. Chacun desdits corps principaux présente ici une première extrémité 33, 43 et une deuxième extrémité 34, 44 et s'étend avantageusement de manière longitudinale entre lesdites première 33, 43 et deuxième 34, 44 extrémités selon la forme choisie. Les guides principaux 3, 4 sont conçus de manière à permettre respectivement la propagation desdits faisceaux lumineux à travers leurs dits corps principaux.

On note que le dispositif lumineux 1 est ainsi conçu pour permettre respectivement la propagation desdits faisceaux lumineux desdites premières extrémités 33, 43 aux deuxièmes extrémités 34, 44 des guides principaux 3, 4.

Lesdits guides principaux 3, 4 sont également avantageusement configurés de manière à permettre l'émission desdits faisceaux lumineux depuis ledit volume intérieur desdits guides principaux 3, 4 vers un espace extérieur à ceux-ci, depuis des zones configurées à cette fin.

Ledit corps principal de chaque guide principal 3, 4 présente pour cela une surface latérale externe 30, 40 qui s'étend de la première 33, 43 à la deuxième extrémité 34, 44 dudit guide principal 3, 4. Ladite surface latérale 30, 40 constitue ici une frontière entre le volume intérieur de chaque corps principal et ledit espace extérieur audit corps principal. En particulier, le corps principal de chaque guide principal 3, 4 est conçu de sorte que les faisceaux lumineux se réfléchissent contre la surface latérale 30, 40 dudit corps principal pour se propager dans le corps, sauf en des zones choisies d'où ils pourront sortir dudit corps.

Comme illustré en particulier aux figures 2 et 4, avantageusement, une portion 36, 46 de l'un desdits guides principaux 3, 4 est située au voisinage, ici au contact, d'une portion 36, 46 de l'autre desdits guides principaux 3, 4. Lesdites portions 36, 46 sont dites portions voisines. En particulier, ici, le contact entre les deux portions voisines 36, 46 des guides principaux 3, 4 se fait au niveau de leurs surfaces latérales 30, 40. Autrement dit, le long desdites portions voisines 36, 46, les surfaces latérales 30, 40 de l'un et l'autre des guides principaux 3, 4 se rejoignent et les guides sont en continuité de matière l'un de l'autre.

On note que ladite portion voisine 36, 46 de chaque guide principal 3, 4 comprend avantageusement, mais non nécessairement, la première extrémité 33, 43 dudit guide principal 3, 4.

Comme illustré en particulier aux figures 2, lesdites deux portions voisines 36, 46 des guides principaux 3, 4 définissent à elles deux une zone de jonction 60 du dispositif lumineux 1. Autrement dit, lesdits guides principaux 3, 4 sont en contact l'un avec l'autre au niveau de ladite zone de jonction 60, c'est-à-dire le long desdites portions voisines 36, 46.

On notera que lesdites portions voisines 36, 46 sont ici agencées sensiblement parallèlement l'une à l'autre. Elles présentent à elles deux, en section, la forme d'un huit.

En dehors desdites portions voisines 36, 46, lesdits guides principaux de lumière divergent l'un de l'autre au niveau d'une région de divergence 90. Autrement dit, lesdits guides principaux 3, 4 de lumière se séparent et s'écartent l'un de l'autre à partir de ladite région de divergence 90. Autrement dit encore, lesdits guides principaux 3, 4 s'écartent l'un de l'autre en dehors de leurs zones de jonction 36, 46.

Autrement dit encore, on appelle « région de divergence» 90 la région au niveau de laquelle les guides principaux 3, 4 s'écartent l'un de l'autre.

Autrement dit encore, chacun desdits guides de lumière 3, 4 comprend une deuxième portion, dite portion libre 38, 48, lesdites portions libres 38, 48 étant agencées à distance l'une de l'autre. Avantageusement, mais non nécessairement, ladite portion libre 38, 48 de chacun desdits guides principaux 3, 4 comprend la deuxième extrémité 34, 44 dudit guide principal 3, 4.

Ainsi, on peut diviser chacun desdits guides principaux 3, 4 en deux portions dont ladite portion voisine 36, 46 et ladite portion libre 38, 48.

On remarquera que lesdites portions voisines 36, 46 des guides principaux 3, 4 s'étendent chacune entre l'une desdites premières extrémités 33, 43 desdits guides principaux 3, 4 et ladite région de divergence 90. Autrement dit, ladite zone de jonction 60 s'étend entre lesdites premières extrémités 33, 43 de chaque guide principal 3, 4 et ladite région de divergence 90.

Autrement dit, chaque guide principal 3, 4 est composé, de sa première extrémité 33, 43 jusqu'à sa deuxième extrémité 34, 44, successivement et dans cet ordre, de sa portion voisine 36, 46 puis de sa portion libre 38, 48.

On notera que la portion libre 38, 48 de chaque guide principal s'étend ici de la région de divergence 90 jusqu'à sa dite deuxième extrémité 34, 44.

Comme illustré aux figures 2, 4 et 5, les deux guides principaux 3, 4 forment sensiblement, à eux deux, un Y, ledit Y étant composé d'une branche inférieure et de deux branches supérieures. Ici, la branche inférieure du Y est formée par la zone de jonction 60 du dispositif lumineux 1. Chacune des branches supérieures dudit Y est, elle, formée par la portion libre 38, 48 de l'un des guides principaux 3, 4.

Selon l'invention, et comme illustré aux différentes figures, ledit dispositif lumineux 1 comprend également un guide de raccordement 13. Le dispositif lumineux 1 est en outre configuré pour alimenter en lumière, et donc en faisceaux lumineux 100, ledit guide de raccordement 13 à partir desdits guides principaux 3, 4. Comme les deux guides principaux 3, 4, ledit guide de raccordement 13 est conçu de manière à permettre la propagation desdits faisceaux lumineux 100 dans un volume intérieur dudit guide de raccordement 13. En outre, ledit guide de raccordement 13 est également conçu pour émettre des faisceaux lumineux 100 entre ledit volume intérieur dudit guide raccordement 13 et un espace extérieur à celui-ci. Ledit guide de raccordement 13 est agencé entre les deux guides principaux 3, 4 qu'il relie entre eux, l'un à l'autre.

Comme lesdits guides principaux 3, 4, ledit guide de raccordement 13 comprend un corps monobloc et est issu d'un seul et même matériau, à savoir le même matériau que celui formant les corps principaux des guides principaux 3, 4. Ledit guide de raccordement 13 est joint en outre en continuité de matière avec l'un et l'autre des guides principaux 3, 4, au niveau de leur surface latérale respective 30, 40. Autrement dit, lesdits guides principaux 3, 4 et le guide de raccordement 13 sont issus de matière. De cette manière, la propagation desdits faisceaux lumineux est favorisée entre chacun des guides principaux 3, 4 et ledit guide de raccordement 13.

On note que la jonction entre ledit guide de raccordement 13 et lesdits guides principaux 3, 4 se fait avantageusement à distance des premières 33, 43 et deuxièmes 34, 44 extrémités desdits guides principaux 3, 4. Ledit guide de raccordement 13 se situe ici à proximité de la région de divergence 90 de sorte que ledit guide de raccordement 13 et une partie proximale desdites portions libres 38, 48 forment une zone sensiblement triangulaire.

En particulier, ledit guide de raccordement 13 est ici longitudinal et présente deux extrémités 131, 132. Autrement dit, ledit guide de raccordement 13 s'étend avantageusement de manière longitudinale entre lesdites extrémités 131, 132. Chacune desdites extrémités 131, 132 du guide de raccordement 13 est jointe, en continuité de matière, avec la surface latérale 30, 40 de l'un ou l'autre des guides principaux 3, 4. Autrement dit, chacune desdites extrémités 131, 132 dudit guide de raccordement 13 est confondue avec une partie de la surface latérale 30, 40 de l'un ou l'autre des guides principaux 3, 4.

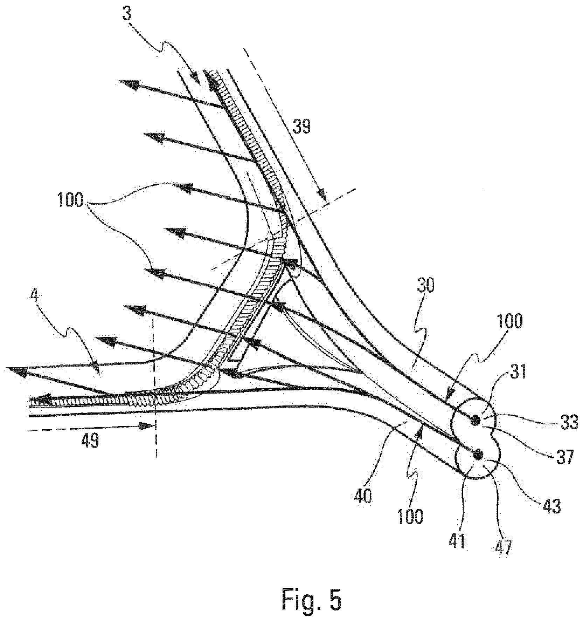

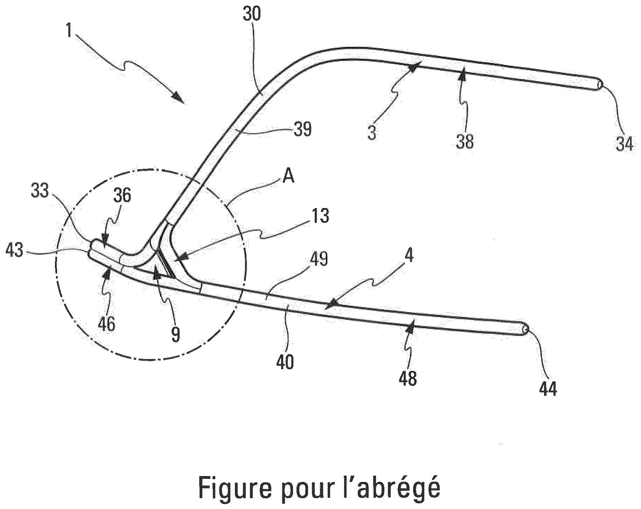

Comme dit ci-avant et illustré à la figure 5, ledit guide de raccordement 13 est avantageusement conçu pour émettre de la lumière, c'est-à-dire des faisceaux lumineux 100. La continuité de matière, notamment au niveau de la jonction, entre ledit guide de raccordement 13 et lesdits guides principaux 3, 4 permet la propagation et l'émission des faisceaux lumineux sans qu'il y ait création de zone d'ombre ou de discontinuité lors de l'émission de faisceaux lumineux.

La jonction entre ledit guide de raccordement 13 et chacun desdits guides principaux 3, 4 se fait au niveau des portions libres 38, 48 de chaque guide principal 3, 4. Autrement dit, les jonctions entre les extrémités 131, 132 du guide de raccordement 13 et la surface latérale 30, 40 de chaque guide principal 3, 4 s'opère au niveau desdites portions libres 38, 48 des guides principaux 3, 4.

Seule une partie, dite zone émettrice 39, 49, de chacun des guides principaux 3, 4 est destinée à émettre des faisceaux lumineux 100. Pour chaque guide principal 3, 4, ladite zone émettrice 39, 49 s'étend le long de l'une des portions libres 38, 48, depuis l'une des extrémités 131, 132 du guide de raccordement à l'une desdites deuxièmes extrémités 34, 44 du guide principal 3, 4.

Le dispositif lumineux 1 est ainsi conçu de manière à émettre des faisceaux lumineux 100 le long desdites zones émettrices 39, 49 de chaque guide principal 3, 4 ainsi que le long dudit guide de raccordement 13, d'une extrémité 131, 132 à l'autre extrémité 131, 132 de celui-ci. L'ensemble composé de chaque zone émettrice 39, 49 et du guide raccordement 13 est appelé partie illuminée du dispositif lumineux 1.

Grâce à l'invention, le dispositif lumineux 1 est apte à émettre des faisceaux lumineux 100 sans discontinuité ni zone d'ombre le long de ladite partie illuminée. Comme visible en particulier aux figures 2, 4 et 5, ladite partie illuminée du dispositif lumineux 1 présente avantageusement une forme en C.

Alternativement, ladite partie illuminée du dispositif lumineux 1 pourra présenter une toute autre forme. Par exemple, dans un mode de réalisation non illustré par les figures, les deuxièmes extrémités 34, 44 de chaque guide principal 3, 4 pourront être jointes l'une à l'autre, notamment en continuité de matière. Dans ce cas, ladite partie illuminée dessine une boucle et présente une forme sensiblement en O.

Chacun desdits guides principaux 3, 4 de lumière comprend avantageusement des moyens de réflexion 5, 6. Lesdits moyens de réflexion 5, 6 sont par exemple des prismes et/ ou des motifs de réflexion. Ils sont agencés de manière continue et régulière le long des zones émettrices 39, 49 de chaque guide principal 3, 4, au niveau des surfaces latérales 30, 40 de ceux-ci. Lesdits moyens de réflexion 5, 6, sont conçus et agencés de sorte qu'une partie des faisceaux lumineux 100 puisse se réfléchir sur lesdits moyens de réflexion 5, 6. La réflexion de ces faisceaux lumineux 100 sur lesdits moyens de réflexion 5, 6 permet leur sortie des guides principaux 3, 4, en particulier du corps principal de chacun desdits guides principaux 3, 4. Lesdits moyens de réflexion 5, 6 permettent ainsi la diffusion des faisceaux lumineux 100 depuis le volume intérieur de chaque guide principal 3, 4 à un espace extérieur de celui-ci. Autrement dit, lesdits moyens de réflexion 5, 6 permettent l'émission desdits faisceaux lumineux 100 par chacun desdits guides principaux 3, 4.

Ledit guide de raccordement 13, lui, comprend avantageusement des moyens de passage 12 de la lumière. Lesdits moyens de passage 12 sont ici agencés de manière continue et régulière sur toute la longueur dudit guide de raccordement 13, d'une extrémité 131, 132 à l'autre extrémité 131, 132 de celui-ci. Lesdits moyens de passage 12 sont conçus de manière à permettre un passage des faisceaux lumineux entre chacun des guides principaux 3, 4 et le guide de raccordement 13 comme cela sera développé plus bas en relation avec la description d'un corps intermédiaire 9.

Lesdits moyens de passage 12 dudit guide de raccordement 13 comprennent avantageusement des moyens de réflexion conçus pour permettre en outre audit guide de raccordement 13 d'émettre des faisceaux lumineux 100. L'émission de lumière par le guide de raccordement 13 grâce auxdits moyens de réflexion de celui-ci se fait d'une manière similaire à l'émission de lumière de chaque guide principal 3, 4 grâce auxdits moyens de réflexion 5, 6 de ceux-ci.

Avantageusement, comme illustré aux figures 4 et 5, lesdits moyens de réflexion 5, 6 de chaque guide principal 3, 4 sont agencés en continuité des moyens de passage dudit guide de raccordement. Cet agencement en continuité participe à une illumination homogène, continue, régulière et sans zone d'ombre de la partie illuminée du dispositif lumineux 1. Ledit dispositif lumineux 1 comprend en outre ledit corps intermédiaire 9. Le corps intermédiaire 9 est conçu de manière à permettre un guidage des faisceaux lumineux 100 depuis chacun desdits guides principaux 3, 4 jusqu'audit guide de raccordement 13. En particulier, le corps intermédiaire 9 permet un guidage d'une partie des faisceaux lumineux 100 depuis chacun des guides principaux 3, 4 de lumière vers et jusqu'auxdits moyens de passage 12 du guide de raccordement 13.

Le corps intermédiaire 9 est agencé au niveau de ladite région de divergence 90, c'est-à-dire entre ladite zone de jonction 60 dudit dispositif lumineux 1 et le guide de raccordement 13. Le corps intermédiaire 9 est ainsi situé entre les deux guides principaux 3, 4. Avantageusement, le corps intermédiaire 9 est issu de matière avec chacun des guides principaux 3, 4. En particulier, le corps intermédiaire 9 est joint en continuité de matière et/ou issu de matière avec les surfaces latérales 30, 40 desdits guides principaux 3, 4 de lumière.

Ledit corps intermédiaire 9, comme le corps du guide de raccordement 13 et les corps principaux des guides de raccordement 3, 4, est monobloc et formé d'un seul et même matériau, à savoir le même matériau que celui constituant les guides principaux 3, 4 et le guide de raccordement 13. Cette unicité de matériau permet de favoriser la propagation des faisceaux lumineux entre chacun des guides principaux 3, 4 et ledit corps intermédiaire 9.

Ici, comme illustré à la figure 2, le corps intermédiaire présente une surface d'émission 92, agencée en vis-à-vis avec ledit guide de raccordement 13. En particulier, ladite surface d'émission 92 est agencée en vis-à-vis desdits moyens de passage 12 du guide de raccordement 13. Ladite surface d'émission 92 est configurée pour favoriser le passage de faisceaux lumineux 100 entre le corps intermédiaire 9 et ledit guide de raccordement 13. En particulier, ladite surface d'émission 92 est conçue de manière à améliorer le passage desdits faisceaux lumineux entre le corps intermédiaire et les moyens de passage 12 dudit guide de raccordement 13. On notera encore, qu'avantageusement, ladite surface d'émission 92 est plane, notamment de manière à permettre la sortie des faisceaux lumineux 100 depuis le corps intermédiaire 9, comme illustré à la figure 5.

Le corps intermédiaire 9 présente ici une épaisseur, mesurée selon une direction orthogonale à un plan dans lequel sont confondues des directions d'extension de chacun des guides principaux 3, 4 au niveau de ladite région de divergence 90. Avantageusement, l'épaisseur du corps intermédiaire 9 est croissante à mesure que l'on s'éloigne de ladite zone de jonction 60 du dispositif lumineux. Autrement dit, le corps intermédiaire 9 présente une épaisseur croissante à mesure que l'on s'éloigne des portions voisines 36, 46 des guides principaux 3, 4. On notera par ailleurs qu'ici, ledit corps intermédiaire 9 prend sensiblement la forme d'une cale. Avantageusement, selon une coupe parallèle audit plan, le corps intermédiaire 9 présente une forme sensiblement triangulaire, épousant deux des côtés du triangle formé par lesdits guides principaux 3, 4 et ledit guide de raccordement 13.

On remarquera également, qu'avantageusement, le corps intermédiaire 9 et ledit guide de raccordement 13 sont séparés l'un de l'autre par un espace 93 ou une fente, situé entre ladite surface d'émission 92 et ledit guide de raccordement 13, pour la bonne propagation des faisceaux lumineux entre eux.

Comme illustré à la figure 5, le dispositif lumineux 1 pourra comprendre au moins une source de lumière, ici deux sources de lumières, non illustrées, conçues pour émettre lesdits faisceaux lumineux 100 vers l'espace intérieur 31, 41 de chacun desdits guides principaux 3, 4. Chaque source lumineuse pourra elle-même comprendre une ou plusieurs diodes électroluminescentes, ici une. Lesdites sources de lumière sont par exemple agencées chacune au niveau de ladite première extrémité 33, 43 de chacun desdits guides principaux 3, 4 de lumière. A cet égard, chacun desdits guides principaux 3, 4 comprend par exemple une surface d'entrée 37, 47, ladite surface d'entrée 37, 47 étant agencée au niveau de ladite première extrémité 33, 43 sensiblement perpendiculairement à ladite surface latérale 30, 40.

Ladite surface d'entrée 37, 47 de chaque guide principal 3, 4 est avantageusement disposée en face de l'une desdites sources de lumière, à proximité de celle-ci, de manière à permettre l'entrée desdits faisceaux lumineux à l'intérieur du guide principal 3, 4 à travers ladite surface d'entrée 37, 47.

On notera, qu'avantageusement, le guide de raccordement 13 est issu de moulage avec chacun desdits guides principaux 3, 4.

A ce sujet, lesdits prismes 12 du guide de raccordement 13 sont avantageusement situés en relief par rapport à sa surface latérale. Ceci facilite la conception du moule servant à la fabrication du dispositif lumineux 1.

On notera qu'ici les guides principaux 3, 4, le guide de raccordement 13 et le corps intermédiaire 9 sont issus de matière et de moulage les uns avec les autres. Avantageusement, les guides principaux 3, 4, le guide de raccordement 13 et le corps intermédiaire 9 font corps.

L'invention concerne encore une unité d'éclairage et/ou signalisation, telle qu'un projecteur, un feu arrière ou une unité de feu de signalisation diurne (DRL) comprenant un dispositif lumineux 1 tel que décrit ci-avant, par exemple associé dans un projecteur à d'autres dispositifs lumineux tels qu'un module de feux de croisement, un module de feux de route, un module d'indicateur de direction ou autres.

## Revendications

1. Dispositif lumineux (1), notamment pour véhicule automobile, comprenant deux guides de lumière (3, 4), dits principaux, et un guide de lumière (13), dit de raccordement, chaque guide principal (3, 4) étant muni d'une surface latérale (30, 40), le guide de raccordement (13) étant joint en continuité de matière à l'un et l'autre desdits guides principaux (3, 4), au niveau de leur surface latérale respective (30, 40), ledit dispositif (1) étant configuré pour alimenter en lumière ledit guide de raccordement (13) à partir desdits guides principaux (3, 4), une portion de l'un des guides principaux (3, 4) est située au voisinage d'une portion de l'autre guide principal (3, 4), les guides principaux (3, 4) divergeant l'un de l'autre, au niveau d'une région de divergence (90), **caractérisé en ce qu'**il comprend en outre un corps intermédiaire (9) permettant de guider la lumière desdits guides principaux (3, 4) vers ledit guide de raccordement (13), ledit corps intermédiaire (9) étant situé au niveau de ladite région de divergence (90).

2. Dispositif lumineux (1) selon la revendication précédente, dans lequel le guide de raccordement (13) comprend des moyens de passage (12) de la lumière, lesdits moyens de passage (12) étant conçus de manière à permettre un passage de la lumière entre le corps intermédiaire (9) et le guide de raccordement (13).

3. Dispositif lumineux (1) selon la revendication précédente, dans lequel ledit guide de raccordement (13) et le corps intermédiaire (9) sont séparés l'un de l'autre par un espace.

4. Dispositif lumineux (1) selon la revendication précédente, dans lequel le corps intermédiaire (9) est issu de matière avec l'un et/ou l'autre des guides principaux (3, 4).

5. Dispositif (1) selon l'une quelconque des revendications précédentes dans lequel le corps intermédiaire (9) comprend une surface d'émission (92) agencée en vis-à-vis du guide de raccordement (13).

6. Dispositif (1) selon l'une quelconque des revendications précédentes, dans lequel le corps intermédiaire (9) comprend des surfaces latérales jointes aux surfaces latérales respectives des guides principaux (3, 4).

7. Dispositif (1) selon l'une quelconque des revendications précédentes, dans lequel le corps intermédiaire présente une épaisseur croissante en s'éloignant desdites portions des guides principaux au voisinage l'une de l'autre.

8. Dispositif (1) selon la revendication 2, dans lequel les guides principaux (3, 4) comprennent des motifs de réflexion (5), agencés en continuité desdits moyens de passage (12) de la lumière.

9. Dispositif (1) selon la revendication précédente, dans lequel lesdits motifs de réflexion (5) et/ou les moyens de passage (12) de la lumière sont des prismes de réflexion.

10. Dispositif (1) selon la revendication précédente, dans lequel les prismes de réflexion sont disposés en relief par rapport à la surface du guide de raccordement (13).

11. Dispositif (1) selon l'une quelconque des revendications précédentes, comprenant en outre au moins une source de lumière, la ou lesdites sources de lumière alimentant en lumière lesdits guides principaux (3, 4).

12. Dispositif (1) selon l'une quelconque des revendications précédentes, dans lequel le guide de raccordement (13) est issu de matière, notamment de moulage, avec chacun des guides principaux (3, 4).

13. Boitier d'éclairage comprenant un dispositif lumineux (1) selon l'une quelconque des revendications précédentes.

## Patentansprüche

1. Leuchtvorrichtung (1), insbesondere für ein Kraftfahrzeug, umfassend zwei Lichtleiter (3, 4), Hauptleiter genannt, und einen Lichtleiter (13), Verbindungsleiter genannt, wobei jeder Hauptleiter (3, 4) mit einer Seitenfläche (30, 40) versehen ist, wobei der Verbindungsleiter (13) stoffschlüssig an den einen und den anderen der Hauptleiter (3, 4) auf Ebene ihrer jeweiligen Seitenfläche (30, 40) angefügt ist, wobei die Vorrichtung (1) dazu ausgestaltet ist, den Verbindungsleiter (13) ausgehend von den Hauptleitern (3, 4) mit Licht zu versorgen, wobei ein Abschnitt des einen der Hauptleiter (3, 4) benachbart zu einem Abschnitt des anderen Hauptleiters (3, 4) gelegen ist, wobei die Hauptleiter (3, 4) auf Ebene eines Divergenzbereichs (90) auseinanderlaufen, **dadurch gekennzeichnet, dass** sie ferner einen Zwischenkörper (9) umfasst, der es ermöglicht, das Licht der Hauptleiter (3, 4) zu dem Verbindungsleiter (13) zu leiten, wobei der Zwischenkörper (9) auf Ebene des Divergenzbereichs (90) gelegen ist.

2. Leuchtvorrichtung (1) nach dem vorhergehenden Anspruch, wobei der Verbindungsleiter (13) Durchlasseinrichtungen (12) für das Licht umfasst, wobei die Durchlasseinrichtungen (12) dazu ausgelegt sind, das Durchlassen des Lichts zwischen dem Zwischenkörper (9) und dem Verbindungsleiter (13) zu ermöglichen.

3. Leuchtvorrichtung (1) nach dem vorhergehenden Anspruch, wobei der Verbindungsleiter (13) und der Zwischenkörper (9) voneinander durch einen Zwischenraum getrennt sind.

4. Leuchtvorrichtung (1) nach dem vorhergehenden Anspruch, wobei der Zwischenkörper (9) materialeinheitlich mit dem einen und/oder dem anderen der Hauptleiter (3, 4) ist.

5. Vorrichtung (1) nach einem der vorhergehenden Ansprüche, wobei der Zwischenkörper (9) eine Emissionsfläche (92) umfasst, die gegenüber dem Verbindungsleiter (13) gestaltet ist.

6. Vorrichtung (1) nach einem der vorhergehenden Ansprüche, wobei der Zwischenkörper (9) Seitenflächen umfasst, die an die jeweiligen Seitenflächen der Hauptleiter (3, 4) angefügt sind.

7. Vorrichtung (1) nach einem der vorhergehenden Ansprüche, wobei der Zwischenkörper eine Dicke aufweist, die mit zunehmender Entfernung von den zueinander benachbarten Abschnitten der Hauptleiter wächst.

8. Vorrichtung (1) nach Anspruch 2, wobei die Hauptleiter (3, 4) Reflexionsmuster (5) umfassen, die in Fortführung der Durchlasseinrichtungen (12) des Lichts gestaltet sind.

9. Vorrichtung (1) nach dem vorhergehenden Anspruch, wobei die Reflexionsmuster (5) und/oder die Durchlasseinrichtungen (12) des Lichts Reflexionsprismen sind.

10. Vorrichtung (1) nach dem vorhergehenden Anspruch, wobei die Reflexionsprismen in Bezug auf die Fläche des Verbindungsleiters (13) erhaben angeordnet sind.

11. Vorrichtung (1) nach einem der vorhergehenden Ansprüche, umfassend ferner mindestens eine Lichtquelle, wobei die Lichtquelle oder die Lichtquellen die Hauptleiter (3, 4) mit Licht versorgt bzw. versorgen.

12. Vorrichtung (1) nach einem der vorhergehenden Ansprüche, wobei der Verbindungsleiter (13) materialeinheitlich, insbesondere aus Formmasse, mit jedem der Hauptleiter (3, 4) ist.

13. Beleuchtungsgehäuse, umfassend eine Leuchtvorrichtung (1) nach einem der vorhergehenden Ansprüche.

## Claims

1. Lighting device (1), notably for motor vehicles, including two so-called principal light guides (3, 4) and a so-called connecting light guide (13), each principal guide (3, 4) including a lateral surface (30, 40), the connecting guide (13) being continuous with both of said principal guides (3, 4) at the level of their respective lateral surface (30, 40), said device (1) being configured to feed said connecting guide (13) with light from said principal guides (3, 4), a portion of one of the principal guides (3, 4) being situated in the vicinity of a portion of the other principal guides (3, 4), the principal guides (3, 4) diverging from each other at the level of a divergence region (90), **characterized in that** it further includes an intermediate body (9) enabling light to be guided from said principal guides (3, 4) to said connecting guide (13), said intermediate body (9) being situated at the level of said divergence region (90).

2. Lighting device (1) according to the preceding claim, in which the connecting guide (13) includes means (12) for passage of light, said passage means (12) being designed to allow light to pass between the intermediate body (9) and the connecting guide (13).

3. Lighting device (1) according to the preceding claim, in which said connecting guide (13) and the intermediate body (9) are separated from each other by a gap.

4. Lighting device (1) according to the preceding claim, in which the intermediate body (9) is continuous with one and/or the other of the principal guides (3, 4).

5. Device (1) according to any one of the preceding claims, in which the intermediate body (9) includes an emission surface (92) arranged facing the connecting guide (13).

6. Device (1) according to any one of the preceding claims, in which the intermediate body (9) includes lateral surfaces joined to the respective lateral surfaces of the principal guides (3, 4).

7. Device (1) according to any one of the preceding claims, in which the intermediate body has a thickness that increases in the direction away from said portions of the principal guides in the vicinity of each other.

8. Device (1) according to Claim 2, in which the principal guides (3, 4) include reflection patterns (5) continuous with said light passage means (12).

9. Device (1) according to the preceding claim, in which said reflection patterns (5) and/or the light passage means (12) are reflection prisms.

10. Device (1) according to the preceding claim, in which the reflection prisms are disposed in relief relative to the surface of the connecting guide (13).

11. Device (1) according to any one of the preceding claims, further including at least one light source, said light source or sources feeding said principal guides (3, 4) with light.

12. Device (1) according to any one of the preceding claims, in which the connecting guide (13) is continuous with, notably molded in one piece with, each of the principal guides (3, 4).

13. Lighting module including a lighting device (1) according to any one of the preceding claims.
